Europäisches Patentamt

European Patent Office

Office européen des brevets

(11) Numéro de publication: **0 077 726**
**B1**

## FASCICULE DE BREVET EUROPEEN

(45) Date de publication du fascicule du brevet:
**12.09.84**

(21) Numéro de dépôt: **82401888.1**

(22) Date de dépôt: **14.10.82**

(51) Int. Cl.³: **F 16 D 65/56**

(54) Frein à tambour et entretoise pour un tel frein.

(30) Priorité: **19.10.81 FR 8119575**

(43) Date de publication de la demande:
**27.04.83 Bulletin 83/17**

(45) Mention de la délivrance du brevet:
**12.09.84 Bulletin 84/37**

(84) Etats contractants désignés:
**DE GB IT SE**

(56) Documents cités:
**DE - A - 2 653 677**
**FR - A - 2 433 678**
**US - A - 2 570 398**
**US - A - 4 148 380**

(73) Titulaire: **SOCIETE ANONYME D.B.A., Centre Paris Pleyel, F-93521 St-Denis Cédex 01 (FR)**

(72) Inventeur: **Carré, Jean-Jacques, 59 Bld de l'Est, F-93340 Le Raincy (FR)**
Inventeur: **Pressaco, Pierre, 45 Rue Emile Zola, F-93120 La Courneuve (FR)**
Inventeur: **Méry, Jean-Claude, 61 Rue Emile Zola, F-93320 Pavillons sous Bois (FR)**

(74) Mandataire: **Poidatz, Emmanuel et al, Société Anonyme D.B.A. 44 rue François 1er, F-75008 Paris (FR)**

## Description

L'invention se rapporte à une entretoise pour frein à tambour susceptible notamment d'équiper un véhicule automobile.

L'invention concerne en particulier une entretoise pour frein à tambour équipé d'un dispositif de réglage automatique destiné à compenser automatiquement l'usure des garnitures de friction associées aux segments de frein afin de maintenir la course au niveau de la pédale de frein et de la commande mécanique si le frein en est équipé, nécessaire à la mise en œuvre de ce dernier à un niveau sensiblement constant et faible.

On connaît de nombreux freins à tambour équipés de dispositifs de réglage automatique, mais la plupart de ces dispositifs présentent un certain nombre d'inconvénients. En particulier ces dispositifs assurent le plus souvent le réglage sans distinguer entre l'augmentation de l'écartement des segments due à l'usure des garnitures et celle qui est due à la dilatation du tambour résultant d'un échauffement du frein. Afin d'éviter les risques de surréglage qui en découlent, on est généralement amené à prévoir un jeu fonctionnel important, auquel correspond une grande course morte au niveau de la pédale de commande des freins. Parmi les freins à tambour connus, il existe cependant un frein qui permet d'éliminer à peu près totalement cet inconvénient. Ce frein est décrit dans le brevet américain N° US 2570398, dans lequel le dispositif de réglage automatique est constitué par un système à rochet agissant sur un système vis-écrou de manière à allonger une entretoise au fur et à mesure de l'usure des éléments de friction. La démultiplication obtenue par ce dispositif permet le réglage par approches successives, et donc d'éviter un surréglage dû à un échauffement temporaire.

Dans un frein de ce type, la mise en œuvre du cylindre de roue a pour double conséquence d'appliquer les garnitures de friction associées aux segments contre le tambour de frein et de faire pivoter le cliquet de réglage d'une valeur correspondant au jeu existant entre les segments et le tambour. Si le jeu est suffisant pour justifier un réglage, le cliquet engage la dent suivante de la roue dentée, et au retour, au relâchement du frein, le cliquet fera tourner l'écrou du système vis-écrou de la valeur correspondante à la dent passée. Ce dispositif permet d'obtenir un réglage limité à des valeurs faibles par suite de la démultiplication obtenue par le système vis-écrou de sorte qu'il évite les surréglages inhérents à la majorité des autres dispositifs de réglage connus. Ainsi, le frein qui vient d'être décrit ne peut suivre pratiquement que les phénomènes très lents qui sont des phénomènes liés à l'usure.

Cependant, ce dispositif présente l'inconvénient d'une part de comporter un nombre élevé de composants de petite dimension, et de comporter d'autre part des éléments fixés à un des segments et des éléments fixés à l'entretoise, le montage d'un tel frein ainsi que les interventions éventuelles pendant la durée de vie de ce frein sont compliqués et risquent de provoquer une détérioration des composants qui pourraient nuire au fonctionnement normal de ce dispositif.

L'invention propose une entretoise pour frein à tambour et un frein à tambour présentant les avantages du frein qui vient d'être décrit, notamment en ce qui concerne l'élimination des risques de surréglage du frein, et dont les inconvénients de montage et de risque de détérioration au cours de la vie du frein sont évités.

Dans ce but, l'invention propose une entretoise pour frein à tambour selon la revendication 1, et un frein à tambour selon la revendication 18.

Grâce aux caractéristiques de cette entretoise, l'ensemble du dispositif de rattrapage automatique se trouve compris dans l'entretoise et par conséquent aucune précaution particulière n'est nécessaire au moment du montage de celle-ci dans le frein, les deux extrémités de l'entretoise étant simplement en appui sur des parties correspondantes des segments, de la même manière qu'une entretoise sans réglage automatique.

On décrira maintenant à titre d'exemple non limitatif un mode de réalisation préféré de l'invention en se référant aux dessins annexés dans lesquels:

— la fig. 1 est une vue en plan d'un frein à tambour réalisé conformément aux enseignements de la présente invention;

— la fig. 2 est une vue agrandie en coupe selon la ligne 2-2 de la fig. 1;

— la fig. 3 est une vue agrandie de l'entretoise représentée sur la fig. 1;

— la fig. 4 est une vue en coupe de l'entretoise suivant la ligne 4-4 de la fig. 2;

— la fig. 5 représente le montage du cliquet sur la lame élastique; et

— la fig. 6 représente une vue schématique du levier et du cliquet montrant la répartition des efforts lors du fonctionnement du réglage automatique.

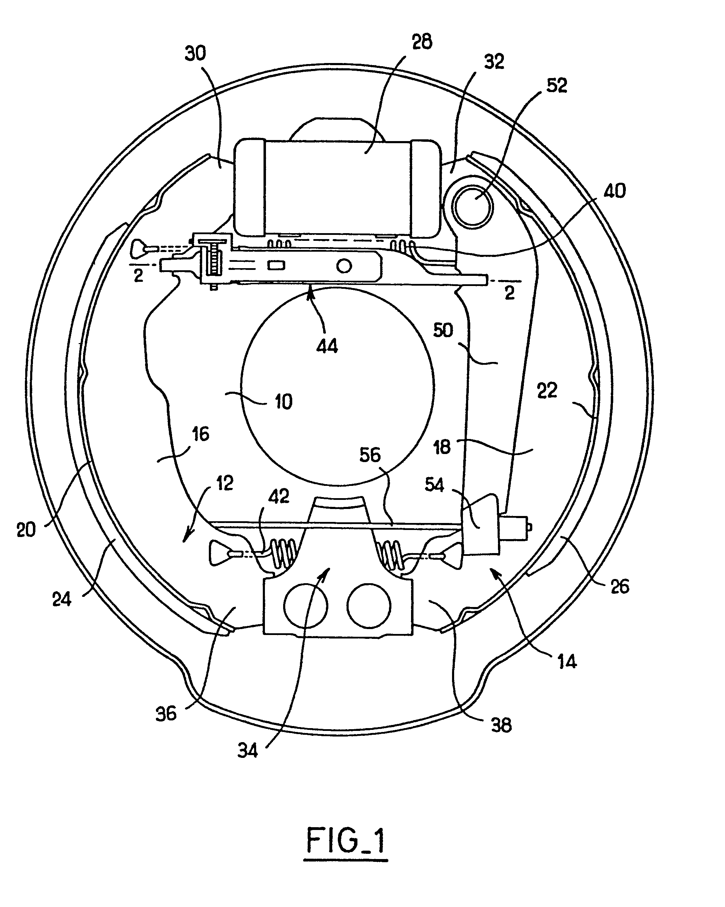

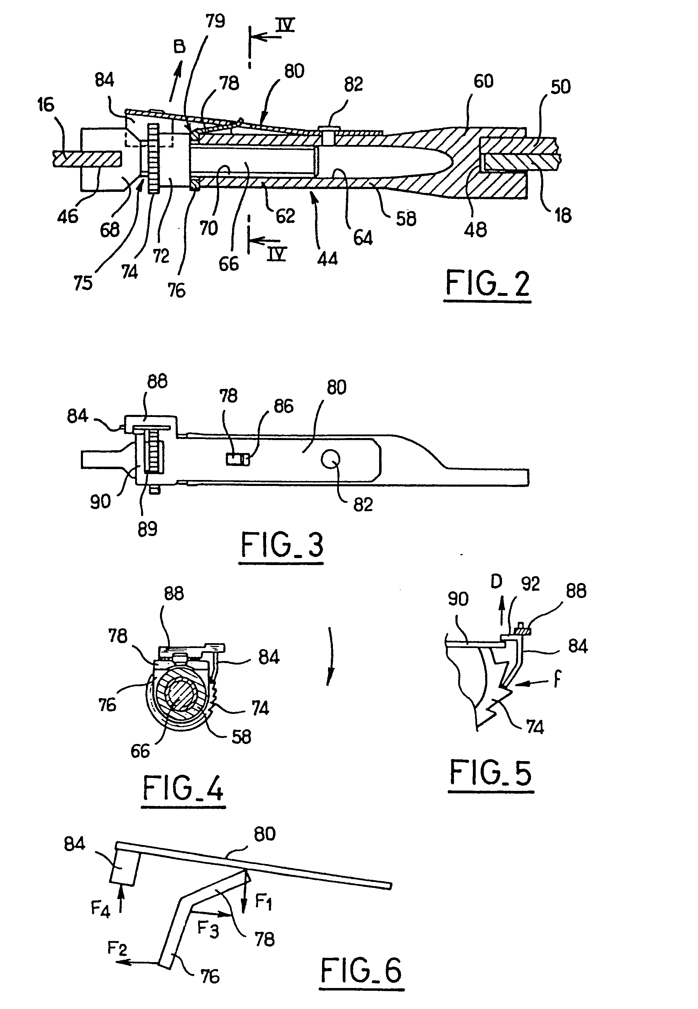

Le frein à tambour représenté sur la fig. 1 comprend une plaque support 10 prévue pour être associée à une partie fixe du véhicule (non représentée) et sur laquelle sont reçus de façon coulissante deux segments de frein 12 et 14. Chacun des segments 12 et 14 comprend une âme sensiblement plate 16, 18 et une jante arquée 20, 22 sur laquelle est monté un élément de friction 24, 26 respectivement au moyen de rivets ou analogues. Des moyens de serrage, constitués dans le mode de réalisation représenté par un cylindre de roue 28, sont disposés entre les deux premières extrémités adjacentes 30 et 32 des segments 12 et 14 respectivement, et un bloc d'ancrage 34, associé à la plaque support 10, est disposé entre les deux autres extrémités 36 et 38 des segments 12 et 14. En outre, des ressorts de rappel 40 et 42 sont disposés respectivement au voisinage du cylindre de roue 28 et du bloc d'ancrage 34 afin de solliciter les extrémités 30 et 32 des segments contre le cylindre de roue 28 et les extrémités 36 et 38 des segments contre le bloc d'ancrage 34 respectivement. Comme le montre plus précisément les fig. 1 et 2, une entretoise 44 est disposée entre les segments 12 et 14 au voisinage du cylindre de roue 28 de façon à définir la distance séparant au repos les extrémités 30, 32 des segments. Chacune des extrémités de l'entretoise 44 comporte une encoche en forme de U 46, 48 dans laquelle sont reçues respectivement les âmes 16 et 18 des segments 12 et 14. Dans le mode de réalisation représenté, l'encoche 48 reçoit en outre un levier de frein à main 50 monté pivotant sur l'extrémité 32 du segment 14 au moyen d'un rivet formant pivot 52 et dont l'extrémité libre 54 est repliée pour recevoir une extrémité d'un câble de commande de frein à main 56 dont l'autre extrémité (non représentée) est prévue pour être reliée à un levier de commande disposé dans le compartiment du conducteur du véhicule. Comme le montre plus particulièrement la fig. 2, l'entretoise 44 est formée d'un premier élément 58 dont une extrémité 60 est en appui sur le segment 14 et sur le levier de frein à main 50. L'autre extrémité 62 de l'élément 58 comporte un alésage 64 dans lequel est monté de manière coulissante l'extrémité 66 d'une pièce d'appui 68 dans laquelle est formée l'encoche 46. L'extrémité 66 de la pièce 68 est munie d'un filetage 70 sur lequel est monté un écrou 72 qui porte une denture 74 sur sa périphérie, la pièce 66 et l'écrou 72 formant le deuxième élément 75 de l'entretoise 44. Entre l'écrou 72 et l'extrémité 62 du premier élément 58 est placée une rondelle 76 qui porte un bras 78. La rondelle 76 et le bras 78 forment un ensemble levier 79. Ce bras 78 par son extrémité libre sollicite en écartement dans le sens de la flèche B de la fig. 2 une lame élastique 80 fixée à l'entretoise 44 et plus précisément au premier élément 58 au moyen d'un rivet 82. La lame 80 porte le cliquet 84 qui coopère avec la denture 74. Dans le mode de réalisation représenté, et en se référant aux fig. 2 et 3, on voit que l'extrémité libre du bras 78 est recourbée et pénètre dans une ouverture 86 formée dans la lame 80 pour maintenir l'alignement de la lame 80 et de l'entretoise 44 et immobiliser en rotation la rondelle 76 par rapport au premier élément 58. En se reportant à la fig. 3, on voit que la lame 80 comporte à son extrémité placée en vis-à-vis de la denture 74 une ouverture 89 susceptible de se placer de part et d'autre de cette denture lorsque la lame 80 se rapproche de l'entretoise 44 limitant ainsi le déplacement relatif des premier 58 et deuxième 75 éléments de l'entretoise 44.

En se reportant à la fig. 4, on voit que l'extrémité du cliquet 84 est repliée de manière à pénétrer dans la denture 74.

En se reportant à la fig. 5 sur laquelle le cliquet 84 est représenté rapporté sur la lame 80 on voit que celui-ci est maintenu entre un bras 88 et un bras 90 de la lame 80. Le bras 90 sollicite une portion 92 du cliquet 84 dans le sens de la flèche D et par basculement autour du bras 88 engendre un effort f sur le cliquet 84 pour engager la denture 74 de l'écrou 72.

Le frein à tambour qui vient d'être décrit en se référant aux fig. 1 à 4 fonctionne de la façon suivante:

Au repos, lorsque les garnitures de friction 24 et 26 sont neuves, les différents éléments constituant le frein occupent les positions représentées sur les fig. 1 à 4. En particulier le ressort 40 qui sollicite les segments 16 et 18 l'un vers l'autre plaque la rondelle 76 en appui d'une part sur l'écrou 72 et d'autre part sur l'extrémité 62 du premier élément 58. Le bras 78 faisant levier écarte la lame élastique 80 de l'entretoise 44. Lors de la mise en œuvre du cylindre de roue 28, les extrémités 30 et 32 des segments 12 et 14 sont sollicitées en éloignement l'une de l'autre de telle sorte que les garnitures de friction 24 et 26 sont amenées en engagement avec le tambour de frein (non représenté) de façon à créer un couple de freinage. Simultanément, sous l'action de la lame 80 qui appuie sur le bras 78, la rondelle 76 se met en travers du fait du jeu existant entre celle-ci et la vis 66 et écarte le premier élément 58 et l'écrou 72 et donc maintient en contact l'élément 58 avec l'âme 18 du segment 14 par l'intermédiaire du levier de frein à main 50 d'une part et d'autre part maintient la pièce d'appui 68 en contact avec l'âme 16 du segment 12. Comme le bras 78 a basculé vers l'entretoise 44, il permet à la lame 80 de se rapprocher également de l'entretoise 44. Comme on le voit plus particulièrement sur la fig. 4, le cliquet 84 engagé dans la denture 74 fait pivoter celle-ci dans le sens de la flèche C et donc l'écrou 72 jusqu'à ce que la lame soit à nouveau immobilisée par le bras 78. L'écrou 72 ayant tourné par rapport à la pièce d'appui 68, cette rotation s'effectue dans le sens correspondant à l'allongement de l'entretoise 44 et donc augmente légèrement la distance séparant au repos les extrémités 30 et 32 des segments 12 et 14.

Lorsque le freinage est relâché, le ressort de rappel des segments 40 rapproche la pièce d'appui 68 et donc l'écrou 72 du premier élément 58. Ce rapprochement provoque le basculement de la rondelle 76 qui se remet telle que représentée sur la fig. 2. Le bras 78 faisant levier soulève la lame 80 dans le sens de la flèche B. Le frottement qui apparaît entre l'écrou 72 et la rondelle 76 empêche la denture 74 et donc l'écrou 72 d'être entraîné par le cliquet 84.

Lorsque l'usure des éléments de friction augmente, la rondelle 76 bascule de plus en plus, le bras 78 permet à la lame 80 de se rapprocher de plus en plus de l'entretoise 44 et donc, lorsqu'une limite prédéterminée est atteinte, le cliquet 84 au retour vers la position de repos engagera la dent suivante de la denture 74 permettant ainsi lors des freinages suivants d'allonger à nouveau l'entretoise 44.

Comme le montre plus particulièrement le schéma 6 la lame 80 applique une force $F_1$ sur l'extrémité du bras 78 et par basculement de la rondelle 76 engendre deux forces $F_2$ et $F_3$ appliquées respectivement sur l'écrou 72 et sur l'extrémité 62 de l'élément 58. Ces forces $F_2$ et $F_3$ forment dispositif d'antirotation pour l'écrou 72. Lorsque le cliquet 84 vient en appui sur une dent de la denture 74 une force de réaction $F_4$ est appliquée sur le cliquet 84, l'effort emmagasiné dans la lame 80 se répartit entre $F_4$ et $F_1$, $F_1$ diminue donc de même que les forces $F_2$ et $F_3$, l'effort d'antirotation de l'écrou diminuant jusqu'à s'annuler éventuellement, celui-ci est entraîné plus facilement par le cliquet 84. Lorsque la progression du cliquet cesse, l'effort $F_4$ s'annule et l'écrou est à nouveau immobilisé par les forces $F_2$ et $F_3$, $F_1$ ayant repris la valeur totale de l'effort emmagasiné par la lame 80.

Dans un autre mode de réalisation non représenté, il est prévu un ressort supplémentaire placé dans l'alésage 64 du premier élément 58 et agissant sur l'extrémité 66 de la pièce 68 pour confirmer les appuis sur les segments 12 et 14 des pièces 68 et 58 de l'entretoise 44.

Dans un autre mode de réalisation non représenté, un ressort est monté entre la pièce 58 et le segment 14 d'une part et entre la pièce 68 et le segment 12 d'autre part.

Le cliquet peut être rapporté sur la lame élastique ou faire partie intégrante de celle-ci ; en outre le centrage de la lame par rapport à l'entretoise peut être obtenu par des saillies formées sur la lame et coopérant avec des portions correspondantes de l'entretoise.

**Revendications**

1. Entretoise à réglage automatique pour frein à tambour destinée à être montée au voisinage de moyens de serrage (28) disposés entre deux premières extrémités (30, 32) de deux segments (12, 14) garnis d'éléments de friction (24, 26), ladite entretoise (44) en appui par chacune de ses extrémités sur chacun des deux segments (12, 14) comportant un dispositif d'allongement automatique en fonction de l'usure des éléments de friction formé par un système vis-écrou (66, 72) commandé par un cliquet (84) sollicitant une denture (74) solidaire d'un des éléments (72) du système vis-écrou (66, 72), caractérisée en ce que ledit cliquet est porté par une lame élastique (80) solidaire de ladite entretoise (44), ladite lame (80) étant écartée élastiquement de ladite entretoise (44), le frein étant au repos, au moyen d'un levier basculant (79) monté sur ladite entretoise, ledit levier autorisant par basculement le rapprochement entre ladite lame (80) et ladite entretoise (44) lorsque lesdits segments (12, 14) sont sollicités en écartement.

2. Entretoise suivant la revendicatiion 1, caractérisée en ce que ledit levier (79) est formé par une rondelle (76) prolongée par un bras (78) formant un angle supérieur à 90° par rapport à ladite rondelle (76).

3. Entretoise suivant la revendication 2, caractérisée en ce que ladite rondelle (76) est placée entre un premier élément (58) de ladite entretoise (44) et un deuxième élément (75) de ladite entretoise (44).

4. Entretoise suivant la revendication 3, caractérisée en ce que ladite rondelle (76) est placée entre l'écrou (72) du système vis-écrou et une extrémité (62) dudit premier élément (58) de ladite entretoise (44).

5. Entretoise suivant la revendication 4, caractérisée en ce que ladite rondelle (76) est montée avec un jeu diamétral sur la vis (66) du système vis-écrou.

6. Entretoise suivant l'une des revendications 2 à 5, caractérisée en ce que ladite lame élastique (80) solidaire de ladite entretoise (44) est écartée élastiquement de ladite entretoise (44) au moyen dudit bras (78) prenant appui sur ladite lame (80) en un point situé entre ledit cliquet (84) et la zone de fixation de ladite lame (80) utilisée pour solidariser celle-ci sur ladite entretoise (44).

7. Entretoise suivant la revendication 6, caractérisée en ce que ladite rondelle (76) engendre au moyen de la lame (80) des efforts de frottement sur l'écrou (72) dudit système vis-écrou (66, 72) pour former un dispositif antirotation de celui-ci, lesdits efforts diminuant et pouvant s'annuler lorsque ledit cliquet (84) prend appui tangentiellement sur la denture (74).

8. Entretoise suivant la revendication 6 ou 7, prise en combinaison avec la revendication 3, caractérisée en ce que ladite lame (80) est solidaire dudit premier élément (58) de ladite entretoise (44).

9. Entretoise suivant la revendication 8, caractérisée en ce que ladite lame (80) est fixée sur ledit premier élément (58) au moyen d'un rivet (82).

10. Entretoise suivant l'une des revendications 6 à 9, caractérisée en ce que ladite lame (80) sollicite en écartement lesdits premier (58) et deuxième (75) éléments de ladite entretoise (44) au moyen dudit levier (79), la rondelle (76) dudit levier (79) étant susceptible de basculer par rapport à la vis (66) du système vis-écrou.

11. Entretoise suivant l'une des revendications 1 à 10, caractérisée en ce qu'un ressort est monté à l'intérieur d'un alésage (64) formé dans ledit premier élément (58) pour solliciter en écartement lesdites deux extrémités (60, 68) de ladite entretoise (44).

12. Entretoise suivant l'une des revendications 1 à 10, caractérisée en ce qu'un ressort est monté entre chacune des extrémités (68, 60) de ladite entretoise (44) et chacun des segments adjacents (12, 14).

13. Entretoise (44) suivant l'une des revendications 1 à 12, caractérisée en ce qu'une butée (89) formée dans ladite lame (80) est susceptible de coopérer axialement avec ladite denture (74) dudit système vis-écrou pour former un ensemble démontable en bloc.

14. Entretoise suivant la revendication 13, caractérisée en ce que ladite butée (89) est formée par une ouverture (89) de la lame (80).

15. Entretoise suivant l'une des revendications 13 ou 14, caractérisée en ce que ledit cliquet (84) est monté pivotant sur l'extrémité de ladite lame (80) et en ce qu'un bras (90) formé sur ladite lame (80) sollicite ledit cliquet (84) en engagement radial avec la denture (74).

16. Entretoise suivant l'une des revendications 13 à 15, caractérisée en ce que ladite lame (80) comporte une ouverture (86) qui coopère avec ledit levier (75) pour maintenir l'alignement de la lame (80) et de l'entretoise (44).

17. Entretoise suivant l'une des revendications 13 à 15, caractérisée en ce que ladite lame (80) comporte deux saillies qui coopèrent avec ledit premier élément (58) pour maintenir l'alignement de la lame (80) et de l'entretoise (44).

18. Frein à tambour à réglage automatique comprenant deux segments (12, 14) garnis d'éléments de friction (24, 26) susceptibles d'être sollicités en engagement de friction contre un tambour tournant par des moyens de serrage (28) disposés entre deux premières extrémités (30, 32) des segments (12, 14), caractérisé en ce qu'il comporte au moins une entretoise selon l'une des revendications 1 à 17, placée au voisinage desdits moyens de serrage (28).

## Patentansprüche

1. Selbsttättig nachstellbares Strebenteil für eine Trommelbremse, das benachbart zu Spannmitteln (28) zwischen zwei ersten Enden (30, 32) zweier mit Reibgliedern (24, 26) versehener Bakken (12, 14) anzubringen ist, wobei das Strebenteil (44), das mit jedem seiner Enden an jeder der beiden Backen (12, 14) abgestützt ist, eine Vorrichtung aufweist, die sich in Abhängigkeit von der Abnützung der Reibglieder selbsttättig verlängert und von einer Schrauben-Mutter-Anordnung (66, 72) gebildet wird, wobei die Schrauben-Mutter-Anordnung von einer Sperrklinke (84) gesteuert wird, die in eine Verzahnung (74) eines der Elemente (72) der Schrauben-Mutter-Anordnung (66, 72) eingreift, dadurch gekennzeichnet, dass die Sperrklinke von einer Blattfeder (80) getragen wird, die mit dem Strebenteil (44) fest verbunden ist, wobei die Blattfeder (80) in der Ruhestellung der Bremse vom Strebenteil (44) elastisch abgespreizt wird mittels eines am Strebenteil angebrachten schwenkbaren Hebels (79), wobei der Hebel durch Verschwenken eine Bewegung der Blattfeder (80) und des Hülsenteils (44) aufeinander zu ermöglicht, wenn die Backen (12, 14) auseinandergespreizt werden.

2. Strebenteil nach Anspruch 1, dadurch gekennzeichnet, dass der Hebel (79) von einer Beilagscheibe (76) gebildet wird, die durch einen Arm (78) verlängert wird, wobei der Arm mit der Scheibe (76) einen Winkel einschliesst, der grösser als 90° ist.

3. Strebenteil nach Anspruch 2, dadurch gekennzeichnet, dass die Scheibe (76) zwischen einem ersten Element (58) des Strebenteils (44) und einem zweiten Element (75) des Strebenteils (44) angeordnet ist.

4. Strebenteil nach Anspruch 3, dadurch gekennzeichnet, dass die Scheibe (76) zwischen der Mutter (72) der Schrauben-Mutter-Anordnung und einem Ende (62) des ersten Elementes (58) des Strebenteils (44) angeordnet ist.

5. Strebenteil nach Anspruch 4, dadurch gekennzeichnet, dass die Scheibe (76) mit diametralem Spiel auf der Schraube (66) der Schrauben-Mutter-Anordnung angebracht ist.

6. Strebenteil nach einem der Ansprüche 2-5, dadurch gekennzeichnet, dass die mit dem Strebenteil (44) fest verbundene Blattfeder (80) vom Strebenteil (44) mittels des Armes (78) elastisch abgespreizt wird, indem der Arm an der Blattfeder (80) an einem Punkt abgestützt wird, der sich zwischen der Sperrklinke (84) und dem zur Befestigung der Blattfeder (80) am Hülsenteil (44) dienenden Befestigungsbereich der Blattfeder (80) befindet.

7. Strebenteil nach Anspruch 6, dadurch gekennzeichnet, dass die Scheibe (76) über die Blattfeder (80) Reibkräfte auf die Mutter (72) der Schrauben-Mutter-Anordnung (66, 72) ausübt, um eine Drehsicherung für diese zu bilden, wobei diese Kräfte kleiner werden und sich annullieren können, wenn die Sperrklinke (84) an der Verzahnung (74) tangential angreift.

8. Strebenteil nach Anspruch 6 oder 7 in Verbindung mit Anspruch 3, dadurch gekennzeichnet, dass die Blattfeder (80) mit dem ersten Element (58) des Strebenteils nach Anspruch 6 oder 7 in Verbindung mit Anspruch 3, dadurch gekennzeichnet, dass die Blattfeder (80) mit dem ersten Element (58) des Strebenteils (44) fest verbunden ist.

9. Strebenteil nach Anspruch 8, dadurch gekennzeichnet, dass die Blattfeder (80) an dem ersten Element (58) mittels eines Niets (82) befestigt ist.

10. Strebenteil nach einem der Ansprüche 6-9, dadurch gekennzeichnet, dass die Blattfeder (80) das erste (58) und das zweite (75) Element des Strebenteils (44) über den Hebel (79) auseinanderspreizt, wobei die Scheibe (76) des Hebels (79) bezüglich der Schraube (66) der Schrauben-Mutter-Anordnung schwenkbar ist.

11. Strebenteil nach einem der Ansprüche 1-10, dadurch gekennzeichnet, dass eine Feder im Inneren einer Bohrung (64) des ersten Elementes (58) angeordnet ist, um die besagten beiden Enden (60, 68) des Strebenteils (44) auseinanderzuspreizen.

12. Strebenteil nach einem der Ansprüche 1-10, dadurch gekennzeichnet, dass eine Feder zwischen jedem der Enden (68, 60) des Strebenteils (44) und jeder der angrenzenden Backen (12, 14) angeordnet ist.

13. Strebenteil nach einem der Ansprüche 1-12, dadurch gekennzeichnet, dass ein Anschlag (89), der in der Blattfeder (80) gebildet ist, mit der Verzahnung (74) der Schrauben-Mutter-Anordnung axial zusammenwirken kann, um eine als Einheit montierbare Anordnung zu bilden.

14. Strebenteil nach Anspruch 13, dadurch gekennzeichnet, dass der Anschlag (89) von einer Öffnung (89) der Blattfeder (80) gebildet wird.

15. Strebenteil nach Anspruch 13 oder 14, dadurch gekennzeichnet, dass die Sperrklinke (84) am Ende der Blattfeder (80) schwenkbar angebracht ist und dass ein an der Blattfeder (80) angeformter Arm (90) die Sperrklinke radial in Eingriff mit der Verzahnung (74) vorspannt.

16. Strebenteil nach einem der Ansprüche 13-15, dadurch gekennzeichnet, dass die Blattfeder (80) eine Öffnung (86) aufweist, die mit dem Hebel (75) zusammenwirkt, um die Blattfeder (80) und das Strebenteil (44) zueinander ausgerichtet zu halten.

17. Strebenteil nach einem der Ansprüche 13-15, dadurch gekennzeichnet, dass die Blattfeder (80) zwei Vorsprünge aufweist, die mit dem ersten Element (58) zusammenwirken, um die Blattfeder (80) und das Strebenteil (44) zueinander ausgerichtet zu halten.

18. Selbsttätig nachstellbare Trommelbremse mit zwei Backen (12, 14), die mit Reibgliedern (24, 26) versehen sind, die durch Spannmittel (28) in Reibanlage mit einer umlaufenden Bremstrommel drückbar sind, wobei die Spannmittel zwsichen zwei ersten Enden (30, 32) der Backen (12, 14) angeordnet sind, dadurch gekennzeichnet, dass sie mindestens ein Strebenteil nach einem der Ansprüche 1-17 aufweist, das benachbart zu den Spannmitteln (28) angeordnet ist.

## Claims

1. An automatically adjustable strut for a drum brake adapted to be mounted adjacent actuating means (28) disposed between two first ends (30, 32) of a pair of shoes (12, 14) provided with friction members (24, 26), said strut (44) supported by each of its ends on each of the two shoes (12, 14) comprising a device automatically extending in response to wear of the friction members, comprised by a screw-nut-mechanism (66, 72) controlled by a detent pawl (84) engaging teeth (74) of one of the elements (72) of the screw-nut-mechanism (66, 72), characterized in that said detent pawl is supported by a resilient leaf (80) provided at said strut (44), said leaf (80) being resiliently spread from said strut (44), with the brake being at its rest position, by means of a pivoting lever (79) mounted on said lever by pivoting allowing a movement of said leaf (80) and said strut (44) towards each other when said shoes (12, 14) are spread apart.

2. A strut according to claim 1, characterized in that said lever (79) is formed by a washer (76) having an extension formed by an arm (78), which arm includes with said washer (76) an angle greater than 90°.

3. A strut according to claim 2, characterized in that said washer (76) is disposed between a first element (58) of said strut (44) and a second element (75) of said strut (44).

4. A strut according to claim 3, characterized in that said washer (76) is disposed between the nut (72) of the screw-nut-mechanism and one end (62) of said first element (58) of said strut (44).

5. A strut according to claim 4, characterized in that said washer (76) is mounted on the screw (66) of the screw-nut-mechanism with radial play.

6. A strut according to any of claims 2-5, characterized in that said resilient leaf (80) forming part of said strut (44) is resiliently spread from said strut (44) by means of said arm (78) supported against said leaf (80) at a point which is situated between said detent pawl (84) and the anchorage zone of said leaf (80) used to connect the latter to said strut (44).

7. A strut according to claim 6, characterized in that said washer (76) exerts, by means of said leaf (80), friction forces upon the nut (72) of the screw-nut-mechanism (66, 72) in order to prevent rotation of the latter, said forces decreasing and possibly becoming zero when said detent pawl (84) tangentially engages the teeth (74).

8. A strut according to claim 6 or claim 7 in connection with claim 3, characterized in that said leaf (80) is connected to said first element (58) of said strut (44).

9. A strut according to claim 8, characterized in that said leaf (80) is fixed to said first element (58) by means of a rivet (82).

10. A strut according to any of claims 6-9, characterized in that said leaf (80) spreads apart said first (58) and second (75) elements of said strut (44) by means of said lever (79), the washer (76) of the lever (79) being adapted to pivot with respect to the screw (66) of the screw-nut-mechanism.

11. A strut according to any of claims 1-10, characterized in that a spring is mounted in the interior of a bore (64) formed in said first element (58) for spreading apart said two extremities (60, 68) of said strut (44).

12. A strut according to any of claims 1-10, characterized in that a spring is mounted between each of the ends (68, 60) of said strut (44) and each of the adjacent shoes (12, 14).

13. A strut according to any of claims 1-12, characterized in that an abutment (89) formed in said leaf (80) is adapted to axially cooperate with said teeth (74) of said screw-nut-mechanism for forming an assembly to be disassembled as a unit.

14. A strut according to claim 13, characterized in that said abutment (89) is formed by an opening (89) of the leaf (80).

15. A strut according to claim 13 or claim 14, characterized in that said detent pawl (84) is pivotally mounted on the end of said leaf (80) and in that an arm (90) formed on said leaf (80) biases said detent pawl (84) in radial engagement with the teeth (74).

16. A strut according to any of claims 13-15, characterized in that said leaf (80) comprises an opening (86) which cooperates with said lever (75) for maintaining the leaf (80) and the strut (44) aligned.

17. A strut according to any of claims 13-15, characterized in that said leaf (80) comprises two projections which cooperate with said first element (58) for maintaining the leaf (80) and the strut (44) aligned.

18. An automatically adjustable drum brake, comprising two shoes (12, 14) provided with friction members (24, 26) adapted to be urged into frictional engagement with a rotating drum by actuating means (28) disposed between two first ends (30, 32) of the shoes (12, 14), characterized in that it comprises at least one strut according to any of claims 1-17 disposed in the vicinity of said actuating means (28).

FIG_1

FIG_2

FIG_3

FIG_4

FIG_5

FIG_6